(19) Europäisches Patentamt
European Patent Office
Office européen des brevets

(11) **EP 4 815 043 A1**

(12) **EUROPEAN PATENT APPLICATION**
published in accordance with Art. 153(4) EPC

(43) Date of publication:
**30.09.2026 Bulletin 2026/40**

(21) Application number: **24893988.6**

(22) Date of filing: **06.11.2024**

(51) International Patent Classification (IPC):
***H01M 4/13*** *(2010.01)* ***H01M 4/36*** *(2006.01)*
***H01M 4/62*** *(2006.01)* ***H01M 4/505*** *(2010.01)*
***H01M 4/525*** *(2010.01)*

(52) Cooperative Patent Classification (CPC):
**H01M 4/13; H01M 4/36; H01M 4/505; H01M 4/525; H01M 4/62;** Y02E 60/10

(86) International application number:
**PCT/JP2024/039370**

(87) International publication number:
**WO 2025/109996 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.11.2023 JP 2023198016**

(71) Applicant: **Panasonic Intellectual Property Management Co., Ltd.**
**Kadoma-shi, Osaka 571-0057 (JP)**

(72) Inventor: **KATOU Daisuke**
**Osaka 571-0057 (JP)**

(74) Representative: **Eisenführ Speiser**
**Patentanwälte Rechtsanwälte PartGmbB**
**Gollierstraße 4**
**80339 München (DE)**

# (54) POSITIVE ELECTRODE FOR NONAQUEOUS ELECTROLYTE SECONDARY BATTERIES, AND NONAQUEOUS ELECTROLYTE SECONDARY BATTERY

(57) Provided is a positive electrode for nonaqueous electrolyte secondary batteries that makes it possible to suppress deterioration of charge/discharge cycle characteristics even when a positive electrode mixture sheet has a low porosity. A positive electrode (11) is provided with a positive electrode core material (30) and a positive electrode mixture sheet (32) bonded to the surface of the positive electrode core material (30). The positive electrode mixture sheet (32) contains a fibrous binder and a conductive material-coated active material in which a conductive material is attached to the surface of the positive electrode active material. The porosity of the positive electrode mixture sheet (32) is 17.8-23.2%. The mode diameter of the positive electrode mixture sheet (32) obtained by a mercury intrusion method is more than 0.19 μm and less than 0.87 μm.

Figure 2

11
32
30
32



Processed by Luminess, 75001 PARIS (FR)

## Description

### TECHNICAL FIELD

The present disclosure relates to a positive electrode for non-aqueous electrolyte secondary batteries, and a non-aqueous electrolyte secondary battery.

### BACKGROUND

An electrode of a non-aqueous electrolyte secondary battery such as a lithium ion secondary battery is generally prepared by a wet method in which a mixture layer formed by applying an electrode mixture slurry containing an active material and a binder and the like to the surface of a core material as a metal foil is dried and compressed. In recent years, a dry method has been studied in which an electrode mixture containing an active material and a binder and the like is stretched and formed into a sheet to prepare a mixture sheet, and the sheet is joined to a core material to produce an electrode (for example, Patent Literature 1).

### CITATION LIST

### PATENT LITERATURE

Patent Literature 1: JP 2019-512872 A
Patent Literature 2: JP 2015-138617 A
Patent Literature 3: JP 2015-201442 A

### SUMMARY

Meanwhile, although voids retaining a non-aqueous electrolyte are formed in the mixture layer and the mixture sheet, the amount and properties (for example, the pore size and the like) of the voids greatly affect the battery characteristics. Specifically, by lowering the porosity of a positive electrode mixture sheet (that is, increasing the density of the positive electrode mixture sheet), the battery capacity can be improved, but meanwhile, the retained amount of the non-aqueous electrolyte in the positive electrode mixture sheet is lowered, and thus there is a problem that the charge/discharge cycle characteristics are easily deteriorated.

Therefore, an object of the present disclosure is to provide a positive electrode for non-aqueous electrolyte secondary batteries that makes it possible to suppress the deterioration of charge/discharge cycle characteristics even when a positive electrode mixture sheet has a low porosity, and a non-aqueous electrolyte secondary battery using the positive electrode.

A positive electrode for non-aqueous electrolyte secondary batteries according to the present disclosure includes: a positive electrode core material; and a positive electrode mixture sheet joined to a surface of the positive electrode core material, wherein the positive electrode mixture sheet contains a conductive agent-coated active material in which a conductive agent adheres to a surface of a positive electrode active material, and a fibrous binder, the positive electrode mixture sheet has a porosity of greater than or equal to 17.8% and less than or equal to 23.2%, and a mode diameter of the positive electrode mixture sheet obtained by a mercury intrusion method is greater than 0.19 μm and less than 0.87 μm.

A non-aqueous electrolyte secondary battery according to the present disclosure includes the positive electrode for non-aqueous electrolyte secondary batteries.

According to one aspect of the present disclosure, it is possible to provide a positive electrode for non-aqueous electrolyte secondary batteries that makes it possible to suppress the deterioration of charge/discharge cycle characteristics even when a positive electrode mixture sheet has a low porosity, and a non-aqueous electrolyte secondary battery using the positive electrode.

### BRIEF DESCRIPTION OF DRAWINGS

FIG. 1 is a cross-sectional view of a non-aqueous electrolyte secondary battery as an example of an embodiment.
FIG. 2 is a cross-sectional view of a positive electrode as an example of the embodiment.

FIG. 3 is a view showing a step of preparing a positive electrode mixture and a step of preparing a positive electrode mixture sheet from the positive electrode mixture in the case of producing a positive electrode which is an example of the embodiment.

FIG. 4 is a view showing a step of joining a positive electrode mixture sheet to the surface of a positive electrode core material in the case of producing a positive electrode which is an example of the embodiment.

DESCRIPTION OF EMBODIMENTS

Hereinafter, an embodiment of a positive electrode for non-aqueous electrolyte secondary batteries according to the present disclosure and an embodiment of a non-aqueous electrolyte secondary battery including the positive electrode will be described. The embodiments described below are merely examples, and the present disclosure is not limited to the following embodiments. The drawings referred to in the description of the embodiments are schematically illustrated, and dimensional ratios and the like of components drawn in the drawings should be determined in consideration of the following description. Note that the present disclosure includes a configuration obtained by selectively combining a plurality of embodiments and modifications to be described below.

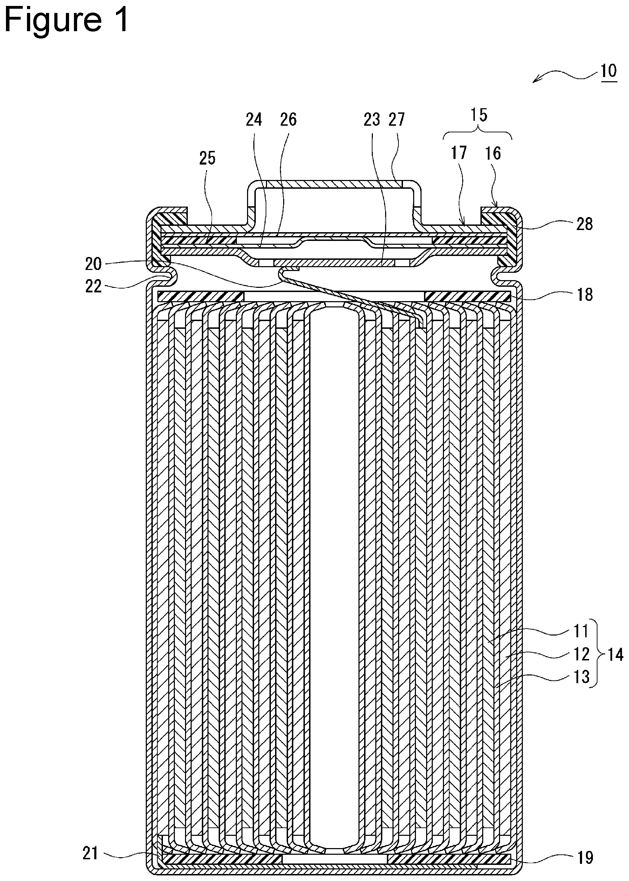

FIG. 1 is a cross-sectional view of a non-aqueous electrolyte secondary battery as an example of an embodiment. A non-aqueous electrolyte secondary battery 10 illustrated in FIG. 1 includes a wound electrode assembly 14 formed by winding a positive electrode 11 and a negative electrode 12 with a separator 13 interposed therebetween, a non-aqueous electrolyte, insulating plates 18 and 19 respectively disposed above and below the electrode assembly 14, and a battery case 15 accommodating the above-mentioned members. The battery case 15 includes a bottomed cylindrical case body 16 and a sealing assembly 17 that closes an opening of the case body 16. Instead of the wound-type electrode assembly 14, another type of electrode assembly, such as a laminated-type electrode assembly in which positive electrodes and negative electrodes are alternately laminated with separators interposed therebetween, may be applied. Examples of the battery case 15 include a metal case having a cylindrical shape, a square shape, a coin shape, or a button shape or the like, and a resin case (so-called pouch type) formed by laminating a resin sheet.

The non-aqueous electrolyte has, for example, ion conductivity (for example, lithium ion conductivity). The non-aqueous electrolyte includes, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as $LiPF_6$ is used.

The case body 16 is, for example, a bottomed cylindrical metal container. A gasket 28 is provided between the case body 16 and the sealing assembly 17 to keep the interior of the battery airtight. The case body 16 has a projecting portion 22 that has, for example, a side surface partially projecting inward and supports the sealing assembly 17. The projecting portion 22 is preferably formed in an annular shape in the circumferential direction of the case body 16, and supports the sealing assembly 17 on the upper surface of the projecting portion.

The sealing assembly 17 is structured by laminating, in sequence from the electrode assembly 14 side, a filter 23, a lower vent member 24, an insulating member 25, an upper vent member 26, and a cap 27. Each of the members constituting the sealing assembly 17 has, for example, a disk shape or a ring shape. The members other than the insulating member 25 are electrically connected to each other. The lower vent member 24 and the upper vent member 26 are connected to each other at the respective central portions, and the insulating member 25 is interposed between peripheral portions of the respective vent members. When the internal pressure of the non-aqueous electrolyte secondary battery 10 increases due to heat generation caused by an internal short circuit or the like, for example, the lower vent member 24 is deformed to push up the upper vent member 26 toward the cap 27 side and is broken, and a current path between the lower vent member 24 and the upper vent member 26 is interrupted. When the internal pressure is further increased, the upper vent member 26 is broken, and gas is discharged through the opening of the cap 27.

In the non-aqueous electrolyte secondary battery 10 illustrated in FIG. 1, a positive electrode lead 20 attached to the positive electrode 11 extends toward the sealing assembly 17 side through a through hole of the insulating plate 18, and a negative electrode lead 21 attached to the negative electrode 12 extends toward the bottom side of the case body 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to a bottom inner surface of the case body 16 by welding or the like, and the case body 16 becomes a negative electrode terminal.

Hereinafter, the positive electrode 11, the negative electrode 12, and the separator 13 included in the non-aqueous electrolyte secondary battery 10 will be further described.

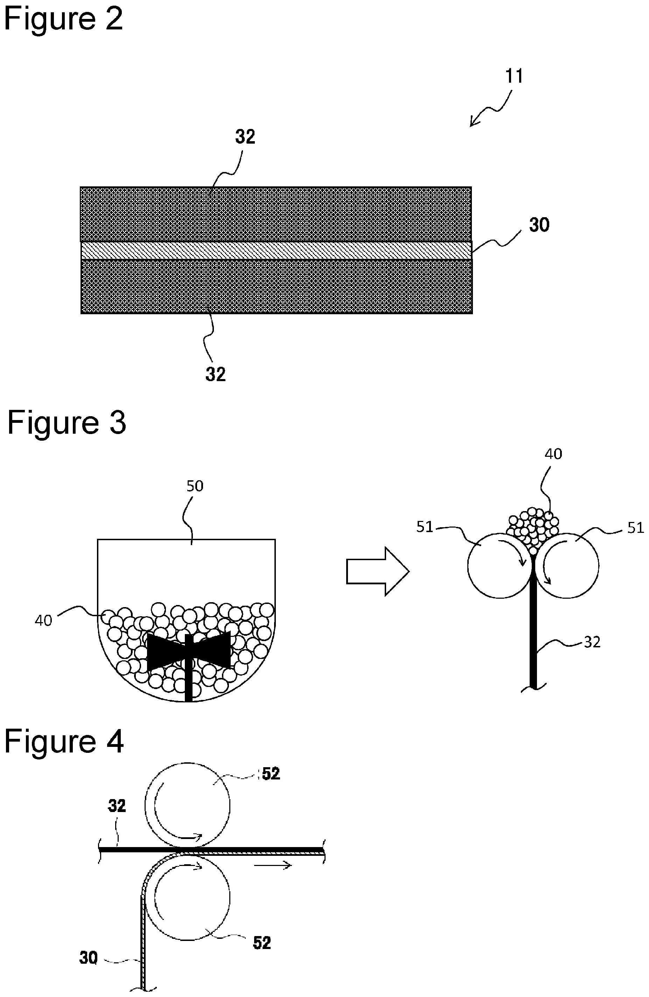

FIG. 2 is a cross-sectional view of the positive electrode as an example of the embodiment. As illustrated in FIG. 2,

the positive electrode 11 includes a positive electrode core material 30 and a positive electrode mixture sheet 32 joined to the surface of the positive electrode core material 30. The positive electrode mixture sheet 32 may be joined to only one side surface of the positive electrode core material 30 or may be joined to both side surfaces of the positive electrode core material 30. The positive electrode mixture sheet 32 is prepared, for example, by molding a positive electrode mixture 40 (see FIG. 3) described later into a sheet shape, and is joined to the positive electrode core material 30 to constitute a positive electrode mixture layer.

As the positive electrode core material 30, for example, a foil of a metal, such as aluminum or an aluminum alloy, which is stable in a potential range of the positive electrode 11, a film in which the metal is disposed on its surface layer, or the like can be used. The thickness of the positive electrode core material 30 is, for example, greater than or equal to 5 μm and less than or equal to 20 μm.

The positive electrode mixture sheet 32 contains a conductive agent-coated active material in which a conductive agent adheres to the surface of the positive electrode active material, and a fibrous binder. The thickness of the positive electrode mixture sheet 32 is, for example, greater than or equal to 50 μm and less than or equal to 150 μm, preferably greater than or equal to 60 μm and less than or equal to 140 μm, and more preferably greater than or equal to 70 μm and less than or equal to 130 μm.

The porosity of the positive electrode mixture sheet 32 is greater than or equal to 17.8% and less than or equal to 23.2%, and preferably greater than or equal to 18.0% and less than or equal to 22.0%. The mode diameter of the positive electrode mixture sheet 32 obtained by a mercury intrusion method is greater than 0.19 μm and less than 0.87 μm, preferably greater than or equal to 0.2 μm and less than or equal to 0.8 μm, and more preferably greater than or equal to 0.4 μm and less than or equal to 0.6 μm. The above range of the porosity of the positive electrode mixture sheet 32 belongs to the range of a low porosity (that is, the range of a high density) as viewed from a general positive electrode mixture layer, but it is presumed that when the mode diameter of the positive electrode mixture sheet 32 satisfies the above range, appropriate pores for retaining a non-aqueous electrolyte are secured in the positive electrode mixture sheet 32. As a result, it is considered that even when the charge and discharge of the non-aqueous electrolyte secondary battery are repeated, the retained amount of the non-aqueous electrolyte in the positive electrode mixture sheet 32 is suppressed from decreasing, and thus the deterioration of the charge/discharge cycle characteristics is suppressed. It is easier to set the porosity and the mode diameter to the above ranges in a method for producing a positive electrode by a dry method using a positive electrode mixture sheet than in a method for producing a positive electrode by a wet method using an electrode mixture slurry.

The porosity of the positive electrode mixture sheet 32 is expressed as the percentage of the volume ratio of a portion excluding all materials included in the positive electrode mixture sheet 32 when the apparent volume (volume including voids) of the positive electrode mixture sheet 32 is 100%. Specifically, first, the weight of the positive electrode 11 is measured, and the weight of the positive electrode mixture sheet 32 obtained by subtracting the weight of the positive electrode core material 30 from the value is divided by the volume of the positive electrode mixture sheet 32 obtained by multiplying the thickness of the positive electrode mixture sheet 32 obtained by subtracting the thickness of the positive electrode core material 30 from the average thickness of the positive electrode 11 by the area of the positive electrode mixture sheet 32 to obtain the density Dc of the positive electrode mixture sheet 32. Next, the positive electrode mixture true density Mc is obtained from the true densities and mass ratios of all the materials contained in the positive electrode mixture sheet 32. The porosity P is determined by the following formula using the density Dc of the positive electrode mixture sheet 32 and the positive electrode mixture true density Mc.

$$P=\{1-(Dc/Mc)\}\times 100$$

The mode diameter refers to the pore size of pores that appear most frequently in the pore size distribution (differential pore volume distribution) of the positive electrode mixture sheet 32 measured by a mercury intrusion method. The mode diameter is also called a maximum frequency pore size. The differential pore volume distribution is a distribution curve obtained by plotting a pore volume corresponding to a pore size with respect to the pore size (μm), and a pore size having a maximum value (peak value) in the range of greater than or equal to 0.003 μm and less than or equal to 2 μm in the distribution curve is calculated as a "mode diameter".

The measurement of the pore size distribution by a mercury intrusion method can be performed using, for example, an apparatus such as Autopore IV 9500 series manufactured by Micromeritics Instrument Corporation. In the measurement, the measurement sample is sealed in a sample container under an inert atmosphere, mercury is injected into the sample container, and pressure is applied to the mercury. Here, the pressure applied to the mercury is appropriately adjusted according to a pore size that the measurement sample can have, and is not particularly limited, but for example, measurement that is performed while the pressure is changed from 0.5 psi (3.4 kPa) to 60,000 psi (413,400 kPa) is preferred in order to measure a wide range of pore sizes. The measurement sample may be the positive electrode 11 that is not charged and discharged.

The density of the positive electrode mixture sheet 32 is preferably greater than or equal to 3.55 g/$cm^3$ and less than or equal to 3.8 g/$cm^3$, more preferably greater than or equal to 3.6 g/$cm^3$ and less than or equal to 3.8 g/$cm^3$, and still more preferably greater than or equal to 3.65 g/$cm^3$ and less than or equal to 3.8 g/$cm^3$, from the viewpoint of suppressing the deterioration of charge/discharge cycle characteristics. The density of the positive electrode mixture sheet 32 is calculated according to the method for calculating the density Dc of the positive electrode mixture sheet 32 described above.

The degree of compression of the conductive agent-coated active material is preferably, for example, less than or equal to 22%. Thereby, the fluidity of the conductive agent-coated active material in the positive electrode mixture sheet 32 can be secured to a predetermined value or more. The lower limit value of the degree of compression of the conductive agent-coated active material is not particularly limited, but is, for example, 10%.

The degree of compression of the conductive agent-coated active material is calculated by the following formula. Examples of an apparatus used for measuring the degree of compression include a powder tester PT-X manufactured by Hosokawa Micron Corporation.

Degree of compression (%) = (Packed bulk density-Loose bulk density)/Packed bulk density $\times$ 100

Examples of the conductive agent contained in the conductive agent-coated active material include carbon black (CB) such as acetylene black (AB) and Ketjenblack, and carbon materials such as graphite, carbon nanotube (CNT), carbon nanofiber, and graphene. The content of the conductive agent in the positive electrode mixture sheet 32 is, for example, preferably greater than or equal to 0.1 mass% and less than or equal to 5 mass%, more preferably greater than or equal to 0.2 mass% and less than or equal to 2 mass%, and still more preferably greater than or equal to 0.3 mass% and less than or equal to 1 mass%, with respect to 100 parts by mass of the positive electrode active material in terms of enhancing the electron conductivity of the conductive agent-coated active material, and being capable of making the pore size in the positive electrode mixture sheet 32 large (that is, increasing the mode diameter by the mercury intrusion method), and the like.

As the positive electrode active material, a lithium transition metal composite oxide is generally used. Examples of a metal element to be contained in the lithium transition metal composite oxide include Ni, Co, Mn, Al, B, Mg, Ti, V, Cr, Fe, Cu, Zn, Ga, Sr, Zr, Nb, In, Sn, Ta, and W. Among them, it is preferable to contain at least one type selected from Ni, Co, and Mn. The content of the positive electrode active material is preferably greater than or equal to 85 mass% and less than or equal to 99 mass%, and more preferably greater than or equal to 90 mass% and less than or equal to 99 mass%, with respect to the mass of the positive electrode mixture sheet 32.

The positive electrode active material is, for example, secondary particles formed by aggregation of a plurality of primary particles. The volume-based median diameter (D50) of the positive electrode active material is preferably greater than or equal to 3 μm and less than or equal to 30 μm. D50 means a particle diameter in which the cumulative frequency in a volume-based particle size distribution is 50% from the smallest particle diameter, and is also referred to as a median diameter. The particle size distribution of the positive electrode active material can be measured by a laser diffraction type particle size distribution measuring apparatus (for example, MT3000II manufactured by MicrotracBEL Corp.) using water as a dispersion medium.

The fibrous binder is obtained, for example, by applying a predetermined shearing force to the particulate binder to fibrillate the binder. The fibrous binder is entangled with particles of the conductive agent-coated active material or the like to bind the particles to each other. Accordingly, the positive electrode mixture sheet 32 can be formed into a single sheet shape. The fibrous binder is preferably a material that can be fibrillated, adheres to the particle surface of the conductive agent-coated active material, and has chemical resistance to an electrolytic solution.

The fibrous binder contains, for example, polytetrafluoroethylene (PTFE) as a main component. Here, the main component means a component having the highest mass ratio. The proportion of the main component in all the constituent components of the fibrous binder is preferably, for example, greater than or equal to 90%. The fibrous binder may be substantially composed only of PTFE. To the extent that the object of the present disclosure is not impaired, the positive electrode mixture sheet 32 may contain a binder that does not form a fiber such as polyvinylidene fluoride (PVDF).

The fibrous binder preferably has a branched structure. A molecule having a branched structure is a molecule having one or more branch points in the molecule. Meanwhile, a molecule having a linear structure means a molecule having no branch point in the molecule. The fibrous binder may be composed of, for example, only PTFE molecules having a branched structure, or may be a mixture of PTFE molecules having a branched structure and PTFE molecules having a linear structure.

The content of the fibrous binder is, for example, preferably greater than or equal to 0.1 parts by mass and less than or equal to 5 parts by mass, more preferably greater than or equal to 0.2 parts by mass and less than or equal to 2 parts by mass or less, and still more preferably greater than or equal to 0.4 parts by mass and less than or equal to 1 part by mass or less, with respect to 100 parts by mass of the positive electrode active material, from the viewpoint of improving the

moldability and stretchability of the positive electrode mixture sheet 32.

When the positive electrode mixture sheet 32 is divided into three equal portions in the thickness direction to form a first region, a second region, and a third region from the positive electrode core material 30 side, the content (a) of the fibrous binder in the first region, the content (b) of the fibrous binder in the second region, and the content (c) of the fibrous binder in the third region preferably satisfy $(c-a)/(a+b+c) \leq \pm 10\%$, and more preferably satisfy $(c-a)/(a+b+c) \leq \pm 5\%$. In the positive electrode 11, by satisfying the above formula, the fibrous binder can be substantially uniformly present on the entire positive electrode mixture sheet 32.

The positive electrode 11 may include an intermediate layer interposed between the positive electrode core material 30 and the positive electrode mixture sheet 32. The intermediate layer contains, for example, a conductive agent and a binder, and improves the joining strength of the positive electrode mixture sheet 32 to the positive electrode core material 30 or reduces the interface resistance.

Hereinafter, an example of a method for producing the positive electrode 11 will be described with reference to FIGS. 3 and 4. FIG. 3 illustrates a step of preparing a positive electrode mixture and a step of preparing a positive electrode mixture sheet from the positive electrode mixture, and FIG. 4 illustrates a step of joining the positive electrode mixture sheet to a positive electrode core material.

The positive electrode 11 is produced through the following steps.

(1) a conductive agent-coated active material preparation step of compositing a positive electrode active material and a conductive agent

(2) A positive electrode mixture preparation step of preparing a positive electrode mixture 40 containing a conductive agent-coated active material and a fibrous binder and having a solid content concentration of substantially 100% (see the left in FIG. 3)

(3) a positive electrode mixture sheet preparation step of forming the positive electrode mixture 40 into a sheet shape to prepare a positive electrode mixture sheet 32 (see the right in FIG. 3).

(4) a joining step of joining the positive electrode mixture sheet 32 to the surface of a positive electrode core material 30 (see FIG. 4)

<Step of Preparing Conductive Agent-Coated Active Material>

The conductive agent-coated active material is obtained, for example, by compositing a positive electrode active material and a conductive agent with an existing device. Specifically, the positive electrode active material and the conductive agent are charged into an existing device such as a stirring granulator or a particle compositing device, and stirred, so that the conductive agent is caused to adhere to the surface of the positive electrode active material to form a composite, thereby preparing the conductive agent-coated active material. Examples of the device used for forming the composite include NOB300-NOBILTA (registered trademark) and MECHANOFUSION (registered trademark) manufactured by Hosokawa Micron Corporation, a hybridization system manufactured by Nara Machinery Co., Ltd., an FM mixer and COMPOSI manufactured by Nippon Coke & Engineering Co., Ltd., a high speed mixer manufactured by EARTHTECHNICA Co., Ltd., an intensive mixer manufactured by Nippon Eirich Co., Ltd., BALANCE GRAN manufactured by Freund-turbo corporation, and a vertical granulator manufactured by Powrex Corporation.

In the conductive agent-coated active material preparation step, a time for the composite treatment of the positive electrode active material and the conductive agent (stirring treatment time) is, for example, preferably greater than or equal to 20 minutes and less than or equal to 40 minutes although it depends on the composite conditions such as the rotation speed of a propeller during stirring. According to the above range, a conductive agent-coated active material having a degree of compression of less than or equal to 22% is easily obtained.

<Positive Electrode Mixture Preparation Step>

The positive electrode mixture 40 illustrated in FIG. 3 is, for example, a powder obtained by stirring and mixing raw materials such as a conductive agent-coated active material and a particulate binder with a mixer 50. The positive electrode mixture 40 has a solid content concentration of substantially 100%. The particulate binder in the raw materials is fibrillated to be a fibrous binder by being stirred and mixed by the mixer 50. The content (that is, the content of the particulate binder) of the fibrous binder is as described above.

The particulate binder used in the positive electrode mixture preparation step contains, for example, polytetrafluoroethylene (PTFE) as a main component. To the extent that the object of the present disclosure is not impaired, the particulate binder may contain a binder that does not form a fiber such as polyvinylidene fluoride (PVDF). The average

particle size of the particulate binder is not particularly limited, but is preferably greater than or equal to 100 μm and less than or equal to 500 μm, and more preferably greater than or equal to 200 μm and less than or equal to 400 μm. The average particle size of the particulate binder can be determined by observation with a scanning electron microscope (SEM). Specifically, 100 randomly selected particles are extracted, the diameters of the circumscribed circles of the 100 particles are measured, and the measured values are averaged to obtain the average particle size.

As the mixer 50, a conventionally known mechanical stirring mixer capable of applying a mechanical shear force can be used. Specific examples of the mixer 50 include a cutter mill (such as Wonder Crusher manufactured by Osaka Chemical Co., Ltd.), a pin mill, a bead mill, kneading machines (a kneader and a Banbury mixer and the like), a planetary mixer, and a fine particle compositing device (a device in which a shear force is generated between a rotor having a special shape and configured to rotate at high speed inside a tank and a collision plate).

A time (time for applying a shear force to the mixture raw material) for the mixing by the mixer 50 varies depending on the type of the mixer 50 and the like, but is preferably within several minutes, and is, for example, longer than or equal to 0.5 minutes and shorter than or equal to 10 minutes. The rotation speed of a propeller of the mixer 50 is, for example, 1,000 rpm to 10,000 rpm.

By stirring and mixing the raw materials by the mixer 50, the positive electrode mixture 40 containing the conductive agent-coated active material and the fibrous binder and having a solid content concentration of substantially 100% is obtained. The positive electrode mixture 40 obtained by the mixer 50 may be used for preparing the positive electrode mixture sheet 32, but the positive electrode mixture 40 obtained by the mixer 50 may be supplied to a pair of rolls (not illustrated) to be formed into a sheet to promote the fibrillation of the binder. Specifically, the positive electrode mixture 40 is supplied to a gap formed between the pair of rolls, and is rolled by the pair of rolls to be formed into a sheet. By supplying the positive electrode mixture 40 to the pair of rolls to form a sheet, a particulate binder that is not fibrillated can be fibrillated in the electrode mixture. The obtained sheet of the positive electrode mixture is pulverized by, for example, a pulverizer or the like and returned to the positive electrode mixture 40. As the pulverizer, a conventionally known pulverizer is used.

<Positive Electrode Mixture Sheet Preparation Step>

In the positive electrode mixture sheet preparation step, the positive electrode mixture sheet 32 is prepared by a dry method using the positive electrode mixture 40 obtained in the positive electrode mixture preparation step.

In the positive electrode mixture sheet preparation step, as illustrated in FIG. 3, the positive electrode mixture 40 is supplied to a pair of rolls 51 and is passed through a gap formed between the pair of rolls 51 so as to be rolled to prepare the positive electrode mixture sheet 32. Note that the rotation axes of the rolls illustrated in FIG. 3 are parallel, and arrows drawn on the rolls indicate the rotation directions of the rolls. The pair of rolls 51 has, for example, the same diameter. The positive electrode mixture sheet 32 may be passed through the gap between the pair of rolls 51 a plurality of times.

The thickness of the positive electrode mixture sheet 32 can be controlled by, for example, the gap between the rolls, the peripheral speeds of the rolls, and the number of times of passing through the rolls, and the like. In the positive electrode mixture sheet preparation step, the positive electrode mixture 40 may be formed into a sheet shape using rolls having peripheral speed ratio different by greater than or equal to 2 times. By making the peripheral speed ratio of the rolls different, the thinning of the positive electrode mixture sheet 32 is facilitated, and the productivity is improved. In the positive electrode mixture sheet preparation step, the positive electrode mixture sheet 32 may be finally compressed. The linear pressure in this case is, for example, greater than or equal to 1 t/cm and less than or equal to 3 t/cm.

<Joining Step>

For joining the positive electrode mixture sheet 32 and the positive electrode core material 30, for example, a pair of rolls 52 illustrated in FIG. 4 is used. When the positive electrode mixture sheet 32 and the positive electrode core material 30 pass between the pair of rolls 52, the positive electrode 11 in which the positive electrode mixture sheet 32 is joined to the surface of the positive electrode core material 30 is obtained. In FIG. 4, the positive electrode mixture sheet 32 is joined only to one side surface of the positive electrode core material 30, but may be joined to both side surfaces of the positive electrode core material 30. In this case, the two positive electrode mixture sheets 32 may be simultaneously joined to both side surfaces of the positive electrode core material 30, or one of the positive electrode mixture sheets 32 may be joined to one surface of the positive electrode core material 30, and then the second positive electrode mixture sheet 32 may be joined to the other surface of the positive electrode core material 30.

At least one of the pair of rolls 52 may be heated. The temperatures of these rolls are preferably from room temperature to 300°C, and more preferably from room temperature to 200°C. The linear pressure between the pair of rolls 52 is, for example, greater than or equal to 0.1 t/cm and less than or equal to 2 t/cm. An intermediate layer such as an adhesive layer may be formed on both surfaces of the positive electrode core material 30 to be subjected to the joining step.

The positive electrode 11 thus obtained may be subjected to a compression step as necessary. Specifically, the

positive electrode 11 may be conveyed to a predetermined gap provided between a pair of opposing rolls, and compressed by the gap. The linear pressure between the pair of rolls compressing the positive electrode 11 is, for example, greater than or equal to 1 t/cm and less than or equal to 3 t/cm.

As described above, by adopting the dry method in which the positive electrode mixture sheet is prepared using the conductive agent-coated active material, and the positive electrode mixture sheet is joined to the surface of the positive electrode core material to produce the positive electrode, the porosity and the mode diameter are easily adjusted to the above ranges. The porosity and the mode diameter are adjusted to fall within the above ranges by, for example, adjusting the linear pressure at the time of compressing the positive electrode mixture sheet 32 and the positive electrode 11 described above, or adjusting the content of the conductive agent.

The negative electrode 12 includes, for example, a negative electrode core material and a negative electrode mixture layer provided on the surface of the negative electrode core material. The negative electrode mixture layer may be provided only on one side surface of the negative electrode core material, or may be provided on both side surfaces of the negative electrode core material. As the negative electrode core material, for example, a foil of a metal such as copper or a copper alloy which is stable in a potential range of the negative electrode 12, or a film in which the metal is disposed on its surface layer, or the like can be used. The negative electrode mixture layer contains, for example, a negative electrode active material and a binder. The negative electrode 12 can be prepared by, for example, applying a negative electrode mixture slurry containing the negative electrode active material and the binder, and the like to the surface of the negative electrode current collector, drying an applied film, and then rolling the applied film using a roller or the like. The above producing method is an example of the wet method, but the dry method may be adopted similarly to the positive electrode 11.

The negative electrode active material is not particularly limited as long as it can reversibly occlude and discharge lithium ions, and a carbon material such as graphite is generally used. The graphite may be any of natural graphite such as scale-like graphite, massive graphite, or earthy graphite and artificial graphite such as massive artificial graphite or graphitized mesophase carbon microbeads. Further, as the negative electrode active material, a metal alloyed with Li such as Si or Sn, a metal compound containing Si or Sn, a lithium titanium composite oxide, or the like may be used. For example, a Si-containing compound represented by $SiO_x$ ($0.5 \le x \le 1.6$), a Si-containing compound in which Si fine particles are dispersed in a lithium silicate phase represented by $Li_{2y}SiO_{(2+y)}$ ($0 < y < 2$), or the like may be used in combination with graphite.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

For the separator 13, for example, a porous sheet or the like, which has ion permeation properties and insulating properties, is used. Specific examples of the porous sheet include microporous thin films, woven fabrics, and nonwoven fabrics. As the material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. In addition, a multi-layer separator including a polyethylene layer and a polypropylene layer may be used, and the separator 13 whose surface is coated with a material such as an aramid-based resin or ceramic may be used.

## EXAMPLES

Hereinafter, the present disclosure will be further described with reference to Examples, but the present disclosure is not limited to these Examples.

### <Example 1>

### [Preparation of Positive Electrode Mixture Sheet]

By using NOB300-NOBILTA (registered trademark) manufactured by Hosokawa Micron Corporation, 99.1 parts by mass of a lithium transition metal composite oxide as a positive electrode active material and 0.9 parts by mass of acetylene black as a conductive agent were mixed for 20 minutes to perform a composite treatment, thereby preparing a conductive agent-coated active material in which the acetylene black adhered to the particle surface of the positive electrode active material. The degree of compression of the conductive agent-coated active material was 18.6%.

Next, the conductive agent-coated active material and polytetrafluoroethylene (PTFE) were charged into Wonder Crusher manufactured by Osaka Chemical Co., Ltd. at a mass ratio of 100:1.0, and mixed at room temperature and a rotation speed of 8,400 rpm for 2 minutes. As PTFE, TE5448 manufactured by Chemours-Mitsui Fluoroproducts Co., Ltd. was used. By the mixing treatment, the PTFE particles were fibrillated to form fibrous PTFE, and a positive electrode

mixture in which the carbon-coated active material and the fibrous PTFE were uniformly dispersed was obtained. The obtained positive electrode mixture had a solid content concentration of 100%.

The positive electrode mixture was passed between a pair of rolls and rolled to prepare a positive electrode mixture sheet. The peripheral speed ratio of the pair of rolls in this case was set to 1:1, and the linear pressure between the pair of rolls was set to 0.1 t/cm.

Furthermore, the positive electrode mixture sheet subjected to the first roll rolling was stretched by the pair of rolls to prepare a stretched positive electrode mixture sheet. The peripheral speed ratio of the pair of rolls in this case was set to 1:2, the linear pressure between the pair of rolls was set to 0.5 t/cm, and a gap between the pair of rolls was set to half the film thickness of the positive electrode mixture sheet before the stretching.

Finally, the stretched positive electrode mixture sheet was passed between two rolls at room temperature and repeatedly stretched until an arbitrary film thickness was reached, thereby obtaining a positive electrode mixture sheet used for a positive electrode.

[Preparation of Positive Electrode]

The positive electrode mixture sheet was disposed on a positive electrode core material made of an aluminum foil, and a laminate of the positive electrode mixture sheets and the positive electrode core material was pressed (linear pressure: 1 t/cm) using a pair of rolls to obtain a positive electrode in which the positive electrode mixture sheet was joined to both surfaces of the core material. From the obtained positive electrode, the porosity (density) of the positive electrode mixture sheet and the mode diameter thereof by a mercury intrusion method were measured. As a result, the porosity of the positive electrode mixture sheet was 21.0% (density: 3.65 g/cm$^3$), and the mode diameter of the positive electrode mixture sheet obtained by the mercury intrusion method was 0.43 $\mu$m.

[Preparation of Negative Electrode]

Graphite, a sodium salt of carboxymethyl cellulose, and a styrene-butadiene rubber were mixed at a mass ratio of 98:1:1, and the mixture was kneaded together with water to prepare a negative electrode mixture slurry. The negative electrode mixture slurry was applied to both surfaces of a copper foil having a thickness of 8 $\mu$m, and the applied film was dried and then rolled by a rolling roller to prepare a negative electrode.

[Preparation of Non-Aqueous Electrolyte]

5 parts by mass of vinylene carbonate (VC) was added to a non-aqueous solvent obtained by mixing ethylene carbonate (EC) and dimethyl carbonate at a volume ratio of 1:3, and $LiPF_6$ was dissolved at a concentration of 1.2 mol/L. This was used as a non-aqueous electrolyte.

[Preparation of Non-Aqueous Electrolyte Secondary Battery]

(1) A positive electrode lead was attached to the positive electrode, and a negative electrode lead was attached to the negative electrode, and then the positive electrode and the negative electrode were wound with a separator made of a polyethylene microporous film interposed between the positive electrode and the negative electrode to prepare a wound electrode assembly.
(2) Insulating plates were disposed on top and bottom portions of the electrode assembly, respectively, and the negative electrode lead was welded to a case body. The positive electrode lead was welded to a sealing assembly, and the electrode assembly was housed in the case body.
(3) The non-aqueous electrolyte was injected into the case body with a reduced pressure method, and then an opening of the case body was sealed with the sealing assembly via a gasket. This was used as a non-aqueous electrolyte secondary battery.

<Example 2>

A positive electrode was prepared in the same manner as in Example 1 except that in the preparation of a positive electrode mixture sheet, 99.5 parts by mass of a lithium transition metal composite oxide and 0.5 parts by mass of acetylene black were mixed for 20 minutes to perform a composite treatment. From the obtained positive electrode, the porosity (density) of the positive electrode mixture sheet and the mode diameter thereof by a mercury intrusion method were measured. As a result, the porosity of the positive electrode mixture sheet was 21.3% (density: 3.64 g/cm$^3$), and the

mode diameter of the positive electrode mixture sheet obtained by the mercury intrusion method was 0.52 μm. Then, this positive electrode was used to prepare a non-aqueous electrolyte secondary battery in the same manner as in Example 1.

<Comparative Example 1>

99.1 parts by mass of a lithium transition metal composite oxide, 0.9 parts by mass of acetylene black, and 1.0 part by mass of polyvinylidene fluoride (PVDF) as a binder were mixed, and an appropriate amount of N-methyl-2-pyrrolidone (NMP) was further added to the mixture to prepare a positive electrode mixture slurry. The positive electrode mixture slurry was applied to both surfaces of a positive electrode core material made of an aluminum foil (thickness: 15 μm), the applied film (positive electrode mixture layer) was dried, and then the applied film was rolled (linear pressure: 1 t/cm) using a pair of rolls to prepare a positive electrode.

From the obtained positive electrode, the porosity (density) of the positive electrode mixture layer and the mode diameter thereof by a mercury intrusion method were measured. As a result, the porosity of the positive electrode mixture layer was 21.2% (density: 3.63 g/cm$^3$), and the mode diameter of the positive electrode mixture layer obtained by the mercury intrusion method was 0.19 μm. Then, this positive electrode was used to prepare a non-aqueous electrolyte secondary battery in the same manner as in Example 1.

<Comparative Example 2>

A positive electrode was prepared in the same manner as in Example 1 except that in the preparation of a positive electrode mixture sheet, 99.7 parts by mass of a lithium transition metal composite oxide and 0.3 parts by mass of acetylene black were mixed for 20 minutes to perform a composite treatment. From the obtained positive electrode, the porosity (density) of the positive electrode mixture sheet and the mode diameter thereof by a mercury intrusion method were measured. As a result, the porosity of the positive electrode mixture sheet was 22.8% (density: 3.57 g/cm$^3$), and the mode diameter of the positive electrode mixture sheet obtained by the mercury intrusion method was 0.87 μm. Then, this positive electrode was used to prepare a non-aqueous electrolyte secondary battery in the same manner as in Example 1.

[Measurement of Capacity Retention Ratio in Charge/Discharge Cycle]

Under an environmental temperature of 25°C, the non-aqueous electrolyte secondary battery in each of Examples and Comparative Examples was charged at a constant current of 0.5 C until 4.2 V was reached, and then charged at a constant voltage of 4.2 V until 1/20 C was reached. Thereafter, the non-aqueous electrolyte secondary battery was discharged at a constant current of 0.5 C until 2.5 V was reached. This charging and discharging operation was defined as one cycle, and 200 cycles were performed. Then, the capacity retention rate of the non-aqueous electrolyte secondary battery in the charge/discharge cycle in each of Examples and Comparative Examples was calculated by the following formula, and the results were summarized in Table 1.

Capacity retention rate = (discharge capacity at 200th cycle/discharge capacity at 1st cycle) $\times$ 100

[Table 1]

| | Composite treatment | Preparation method of positive electrode | Positive electrode mixture sheet (layer) | | | Conductive agent content (wt%) | Capacity retention rate (%) |
|---|---|---|---|---|---|---|---|
| | | | Porosity (%) | Density (g/cm$^3$) | Mode diameter (μm) | | |
| Comparative Example 1 | Absent | Wet method | 21.2 | 3.63 | 0.19 | 0.9 | 85.9 |
| Example 1 | Present | Dry method | 21.0 | 3.65 | 0.43 | 0.9 | 89.3 |
| Example 2 | Present | Dry method | 21.3 | 3.64 | 0.52 | 0.5 | 89.2 |
| Comparative Example 2 | Present | Dry method | 22.8 | 3.57 | 0.87 | 0.3 | 76.2 |

As illustrated in Table 1, the capacity retention rates in the charge/discharge cycle in Examples 1 and 2 were

higher than those in Comparative Examples 1 and 2. Therefore, it can be said that by using a positive electrode including a positive electrode core material and a positive electrode mixture sheet joined to the surface of the positive electrode core material, in which the positive electrode mixture sheet includes a conductive agent-coated active material in which a conductive agent adheres to the surface of a positive electrode active material, and a fibrous binder, the positive electrode mixture sheet has a porosity of greater than or equal to 17.8% and less than or equal to 23.2%, and the mode diameter of the positive electrode mixture sheet obtained by a mercury intrusion method is greater than 0.19 μm and less than 0.87 μm, it is possible to suppress the deterioration of charge/discharge cycle characteristics while the positive electrode mixture sheet has a low porosity.

The present disclosure is further described by the following embodiments.

Configuration 1:
A positive electrode for non-aqueous electrolyte secondary batteries including:

a positive electrode core material; and a positive electrode mixture sheet joined to a surface of the positive electrode core material, wherein
the positive electrode mixture sheet contains a conductive agent-coated active material in which a conductive agent adheres to a surface of a positive electrode active material, and a fibrous binder,
the positive electrode mixture sheet has a porosity of greater than or equal to 17.8% and less than or equal to 23.2%, and
a mode diameter of the positive electrode mixture sheet obtained by a mercury intrusion method is greater than 0.19 μm and less than 0.87 μm.

Configuration 2:
The positive electrode for non-aqueous electrolyte secondary batteries according to Configuration 1, wherein the positive electrode mixture sheet has a density of greater than or equal to 3.55 $g/cm^3$ and less than or equal to 3.8 $g/cm^3$.
Configuration 3:
The positive electrode for non-aqueous electrolyte secondary batteries according to Configuration 1 or 2, wherein a content of the fibrous binder is greater than or equal to 0.1 parts by mass and less than or equal to 5.0 parts by mass with respect to 100 parts by mass of the positive electrode active material.
Configuration 4:
A non-aqueous electrolyte secondary battery including the positive electrode for non-aqueous electrolyte secondary batteries according to any one of Configurations 1 to 3.

REFERENCE SIGNS LIST

| | |
|---|---|
| 10 | Non-aqueous electrolyte secondary battery |
| 11 | Positive electrode |
| 12 | Negative electrode |
| 13 | Separator |
| 14 | Electrode assembly |
| 15 | Battery case |
| 16 | Case body |
| 17 | Sealing assembly |
| 18, 19 | Insulating plate |
| 20 | Positive electrode lead |
| 21 | Negative electrode lead |
| 22 | Projecting portion |
| 23 | Filter |
| 24 | Lower vent member |
| 25 | Insulating member |
| 26 | Upper vent member |
| 27 | Cap |
| 28 | Gasket |
| 30 | Positive electrode core material |
| 32 | Positive electrode mixture sheet |

40 Positive electrode mixture
50 Mixer
51, 52 Pair of rolls

## Claims

1. A positive electrode for non-aqueous electrolyte secondary batteries comprising:

a positive electrode core material; and a positive electrode mixture sheet joined to a surface of the positive electrode core material, wherein
the positive electrode mixture sheet contains a conductive agent-coated active material in which a conductive agent adheres to a surface of a positive electrode active material, and a fibrous binder,
the positive electrode mixture sheet has a porosity of greater than or equal to 17.8% and less than or equal to 23.2%, and
a mode diameter of the positive electrode mixture sheet obtained by a mercury intrusion method is greater than 0.19 μm and less than 0.87 μm.

2. The positive electrode for non-aqueous electrolyte secondary batteries according to claim 1, wherein the positive electrode mixture sheet has a density of greater than or equal to 3.55 $g/cm^3$ and less than or equal to 3.8 $g/cm^3$.

3. The positive electrode for non-aqueous electrolyte secondary batteries according to claim 1 or 2, wherein a content of the fibrous binder is greater than or equal to 0.1 parts by mass and less than or equal to 5.0 parts by mass with respect to 100 parts by mass of the positive electrode active material.

4. A non-aqueous electrolyte secondary battery comprising the positive electrode for non-aqueous electrolyte secondary batteries according to claim 1 or 2.

# Figure 1

10
15
24
26
23
27
25
17
16
28
20
22
18
11
12
13
14
21
19

Figure 2

11
32
30
32

Figure 3

50
40
40
51
51
32

Figure 4

52
32
52
30

**INTERNATIONAL SEARCH REPORT**

International application No. **PCT/JP2024/039370**

**A. CLASSIFICATION OF SUBJECT MATTER**

***H01M 4/13***(2010.01)i; ***H01M 4/36***(2006.01)i; ***H01M 4/62***(2006.01)i; ***H01M 4/505***(2010.01)i; ***H01M 4/525***(2010.01)i
FI: H01M4/13; H01M4/36 C; H01M4/505; H01M4/525; H01M4/62 Z

According to International Patent Classification (IPC) or to both national classification and IPC

**B. FIELDS SEARCHED**

Minimum documentation searched (classification system followed by classification symbols)

H01M4/13; H01M4/36; H01M4/62; H01M4/505; H01M4/525

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-034699 A (PRIME PLANET ENERGY & SOLUTIONS INC.) 13 March 2023 (2023-03-13) entire text | 1-4 |
| A | WO 2018/088320 A1 (HONDA MOTOR CO., LTD.) 17 May 2018 (2018-05-17) entire text | 1-4 |
| A | JP 2009-048876 A (HITACHI MAXELL LTD.) 05 March 2009 (2009-03-05) entire text | 1-4 |
| A | WO 2006/129756 A1 (MATSUSHITA ELECTRIC INDUSTRIAL CO., LTD.) 07 December 2006 (2006-12-07) entire text | 1-4 |
| A | WO 2023/119814 A1 (PANASONIC INTELLECTUAL PROPERTY MANAGEMENT CO., LTD.) 29 June 2023 (2023-06-29) entire text | 1-4 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 January 2025** | **28 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/039370

C. DOCUMENTS CONSIDERED TO BE RELEVANT

| Category* | Citation of document, with indication, where appropriate, of the relevant passages | Relevant to claim No. |
|---|---|---|
| A | WO 2023/182030 A1 (PANASONIC INTELLECTUAL PROPERTY MANAGEMENT CO., LTD.) 28 September 2023 (2023-09-28) entire text | 1-4 |

Form PCT/ISA/210 (second sheet) (July 2022)

**INTERNATIONAL SEARCH REPORT**
**Information on patent family members**

International application No.
**PCT/JP2024/039370**

| Patent document cited in search report | Publication date (day/month/year) | Patent family member(s) | Publication date (day/month/year) |
|---|---|---|---|
| JP 2023-034699 A | 13 March 2023 | US 2023/0079228 A1<br>entire text<br>EP 4141985 A1<br>CN 115732635 A<br>KR 10-2023-0032920 A | |
| WO 2018/088320 A1 | 17 May 2018 | US 2019/0319257 A1<br>entire text<br>EP 3540826 A1<br>CN 109923702 A<br>KR 10-2019-0070353 A | |
| JP 2009-048876 A | 05 March 2009 | CN 101373850 A<br>KR 10-2009-0019734 A | |
| WO 2006/129756 A1 | 07 December 2006 | US 2010/0012403 A1<br>entire text<br>EP 1890348 A1<br>CN 101185184 A | |
| WO 2023/119814 A1 | 29 June 2023 | CN 118318318 A | |
| WO 2023/182030 A1 | 28 September 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019512872 A
- JP 2015138617 A
- JP 2015201442 A